# EUROPÄISCHE PATENTSCHRIFT

(11) **EP 3 443 844 B1**
(45) Veröffentlichungstag und Bekanntmachung des Hinweises auf die Patenterteilung: **09.12.2020**
(21) Anmeldenummer: 18184681.7
(22) Anmeldetag: 20.07.2018
(51) Int. Cl.: A22C 11/00, B65G 47/248

(54) **VORRICHTUNG UND VERFAHREN ZUM AUSRICHTEN VON WÜRSTEN**
DEVICE AND METHOD FOR ALIGNING SAUSAGES
DISPOSITIF ET PROCÉDÉ D'ALIGNEMENT DE SAUCISSES

(30) Priorität: 16.08.2017 DE 202017104924 U
(43) Veröffentlichungstag der Anmeldung: 20.02.2019
(73) Patentinhaber: VEMAG Maschinenbau GmbH, 27283 Verden/Aller (DE)
(72) Erfinder: Meininger, Thorsten, 27283 Verden (DE); Greif, Norman, 28211 Bremen (DE); Brecht, Oliver, 27324 Eystrup (DE); Scharninghausen, Gerd, 27308 Kirchlinteln (DE)
(74) Vertreter: Eisenführ Speiser

(56) Entgegenhaltungen:
- EP-A1- 3 281 529
- WO-A1-99/28057
- DE-A1- 19 507 443
- DE-B- 1 220 322

## Beschreibung

Die Erfindung betrifft eine Vorrichtung zum Ausrichten von Würsten, aufweisend eine Fördereinrichtung zum Transportieren der Würste entlang einer Förderstrecke mit einem vorzugsweise umlaufenden Förderelement, auf welchem die Würste in Abständen zueinander und mit ihrer Längsachse im Wesentlichen senkrecht zur Förderrichtung des Förderelementes auflegbar sind.

Es ist im Allgemeinen bekannt, mehrere Würste zu einer Gruppe von Würsten zusammenzubringen und diese Gruppe von Würsten dann in einer Verpackung abzulegen. Zum Ablegen der Gruppe von Würsten in einer Verpackung, wie beispielsweise einem Tray, ist es häufig entscheidend, dass die Würste der Gruppe dieselbe Ausrichtung zueinander aufweisen. Insbesondere Würste mit Naturdärmen weisen üblicherweise eine Krümmung auf, sodass die Würste mit Naturdärmen insbesondere so zueinander auszurichten sind, dass die hintereinander angeordneten Würstchen jeweils die gleiche Ausrichtung ihrer Krümmung aufweisen, um zum Beispiel gleichmäßig und damit platzsparend verpackt werden zu können.

Im Stand der Technik, wie beispielsweise aus DE 10 2016 114 731, ist beispielsweise eine Vorrichtung zum Ausrichten von Würsten, insbesondere ein sogenannter Naturdarmsortierer, bekannt, der eine Fördereinrichtung mit einem umlaufenden Fördermittel zum Transportieren der Würste entlang einer Förderstrecke aufweist. Die Würste werden zunächst mit ihrer Längsrichtung im Wesentlichen parallel zur Bewegungsbahn der Förderereinrichtung auf dem Fördermittel abgelegt bzw. an dieses überführt. Oberhalb der Fördereinrichtung sind zwei parallel in Förderrichtung umlaufende Förderelemente vorgesehen, welche in einem vorbestimmten Abstand, im Wesentlichen parallel zueinander verlaufen und eine Art Transportkanal für die auszurichtenden Würste ausbilden. Mittels der Förderelemente werden die Würste in Abhängigkeit von ihrer Krümmung nach dem Verlassen des vorderen Endes des Transportkanals in Förderrichtung gesehen, mehr zur einen oder zur anderen Seite auf der Fördereinrichtung positioniert, womit eine Art Sortiereinrichtung ausgebildet ist, welche vielmehr eine Sortierfunktion umsetzt.

Aus WO 99/28057 A1 ist ein Verfahren zum automatisierten Gruppieren von Würsten auf einem Förderband bekannt. Mittels einer Gruppiereinrichtung, welche eine robotergesteuerte Handhabungseinrichtung umfasst, wird eine vorbestimmte Anzahl von Würsten durch Verschieben bzw. Drehen der Würste um eine Drehachse senkrecht zur Längsachse der Würste zu einer Anordnung mit einer vorbestimmten Ausrichtung gruppiert.

Der Erfindung lag vorliegend die Aufgabe zugrunde, eine Vorrichtung zum Ausrichten von Würsten aufzuzeigen, mithilfe der sich bereits etwa quer zur Förderrichtung der Fördereinrichtung ausgerichtete Würste auf einfache und sichere Weise so ausrichten lassen, dass auch Würste mit insbesondere einer aus einem Naturdarm bestehenden Hülle die Fördereinrichtung mit einer gleichmäßig ausgerichteten Krümmung verlassen.

Die Erfindung löst die ihr zugrundeliegende Aufgabe bei einer Vorrichtung zum Ausrichten von Würsten gemäß dem Merkmal von Anspruch 1. Insbesondere ist eine Wendeeinrichtung vorgesehen, welche oberhalb des Förderelementes angeordnet und dazu eingerichtet ist, durch Drehen der Würste im Wesentlichen um ihre Längsachse die etwa quer zur Förderrichtung des Förderelementes ausgerichteten Würste mit ihren Krümmungen auf dem Förderelement identisch auszurichten. Anstatt die Würste mithilfe einer oberhalb der Fördereinrichtung angeordneten Sortiereinrichtung mit ihren vorderen Enden in Richtung der einen oder anderen Seite auf der Fördereinrichtung zu verschieben, werden die im Wesentlichen quer zur Förderrichtung der Fördereinrichtung ausgerichteten Würste beim dem Passieren der Wendeeinrichtung bevorzugt auf dem Förderelement gewendet, so dass sämtliche Würste dann auf dem Förderelement mit identischer Krümmung abtransportiert werden. In einer Ausführungsform der Erfindung ist die erfindungsgemäße Vorrichtung dazu ausgebildet, dass nur die Würste mittels der Wendeeinrichtung oberhalb der Fördereinrichtung gewendet werden, die mit ihrer Krümmung nicht die gewünschte Ausrichtung auf der Fördereinrichtung haben.

In einer bevorzugten Weiterbildung der Erfindung ist die Wendeeinrichtung dazu eingerichtet, die Würste auf dem Förderelement so zu wenden, dass die Krümmungen der Würste jeweils linksseitig oder rechtsseitig ausgerichtet sind. Mithilfe der erfindungsgemäßen Vorrichtung können die Würste beliebig eine linkseitige oder rechtseitige Ausrichtung auf dem Förderband einnehmen. Unter einer linksseitigen Krümmung, auch bezeichnet als Linkskrümmung ist vorliegend die Ausrichtung einer Wurst zu verstehen, bei der die Wurst mit ihren jeweiligen Wurstenden in Förderrichtung weisend und dem Wurstrücken, also dem mittleren Abschnitt der Wurst, entgegen der Förderrichtung weisend auf der Fördereinrichtung bewegt wird.

Unter einer rechtsseitigen Krümmung ist hingegen der im Wesentlichen quergerichtete Transport der Würstchen in Förderrichtung zu verstehen, wobei bei einer Wurst mit einer rechtsseitig ausgerichteten Krümmung, auch nachfolgend bezeichnet als Rechtskrümmung, die Wurst mit dem Wurstrücken in Förderrichtung weisend und mit den beiden Wurstenden entgegengesetzt der Förderrichtung weisend transportiert wird. Über die erfindungsgemäße Ansteuerung der Wendeeinrichtung können Würste mit einer Linkskrümmung bzw. einer linksseitigen Krümmung auf der Fördereinrichtung so gewendet werden, dass sie anschließend eine rechtsseitige Krümmung oder eine Rechtskrümmung aufweisen. In einer weiteren Ausgestaltung der Erfindung können mit der erfindungsgemäßen Wendeeinrichtung sämtliche Würste mit einer rechtsseitigen Krümmung bzw. Rechtskrümmung so oberhalb der Fördereinrichtung gewendet werden, dass nach dem Passieren sämtliche Würste auf der Fördereinrichtung dann eine linksseitige Ausrichtung bzw. eine Linkskrümmung haben. Vorzugsweise werden die Würste zum Wenden um ihre Längsachse gedreht.

Eine Weiterbildung der Erfindung sieht vor, dass die Wendeeinrichtung eine oberhalb des Förderelementes angeordnete, rotierbare und vorzugsweise angetriebene Wenderolle mit einer an einem Abschnitt der Wurst angreifenden Umlauffläche aufweist, deren Rotationsachse im Wesentlichen senkrecht zur Förderrichtung des Förderelementes ausgerichtet ist. Mit der Verwendung einer antreibbaren Wenderolle ist ein einfaches und zugleich sicheres Wenden des jeweils auf der Fördereinrichtung transportierten, um insbesondere die Längsachse zu drehenden Würstchen erreicht. Die Wenderolle greift mit ihrer Umlauffläche bevorzugt an einem Mittenabschnitt der Wursthülle der Wurst an, wodurch ein bevorzugt gleichmäßiges Moment entlang der Wursthülle in Richtung der beiden, bevorzugt etwa gleichmäßig zur Wenderolle beabstandeten Wurstenden wirkt. Bevorzugt wird die Wenderolle mittels einer direkt mit der Wenderolle zusammenwirkenden Antriebseinheit in eine fortwährende Drehbewegung versetzt.

In einer bevorzugten Ausführungsform verläuft die Rotationsachse der Wenderolle in einer Ebene planparallel zur Oberfläche der die gekrümmten Würstchen transportierenden Fördereinrichtung. Vorzugsweise verläuft die Rotationsachse dabei quer zur Förderrichtung, wobei die Drehrichtung der Wenderolle vorzugsweise deckungsgleich zur Förderrichtung des Förderelementes für die gekrümmten Würste ausgerichtet ist.

Vorzugsweise ist die Wenderolle mittels einer Antriebseinheit antreibbar und weist im Betrieb eine Umlaufgeschwindigkeit an ihrer mit der Wurst in Kontakt bringbaren Umlauffläche auf, die verschieden ist zur Fördergeschwindigkeit des Förderelementes. Damit wirkt zwischen der Wenderolle und der Oberseite des Förderelementes eine Relativgeschwindigkeit, welche dafür sorgt, dass vorzugsweise die auf der Fördereinrichtung befindliche Wurst mit falscher Ausrichtung auf dem Förderelement um ihre Längsachse gedreht und damit in die richtige Ausrichtung überführt wird. Bevorzugt wirkt auch auf eine korrekt ausgerichtete Wurst die sich drehende Wenderolle auf einen Abschnitt, bevorzugt ebenfalls auf den Mittenabschnitt der Wurst. Jedoch stützen sich die Wurstenden einer bereits korrekt ausgerichteten Wurst auf der Oberseite des Förderelementes ab. Damit wird dem Weiter- bzw. Überwenden einer bereits korrekt ausgerichteten Wurst durch die Krümmung der Wurst selbst entgegengewirkt. Das macht die Überwachung bzw. Erfassung von bereits korrekt ausgerichteten Würsten überflüssig. Somit können mit der erfindungsgemäßen Wendeeinrichtung Würste mit korrekt ausgerichteter Krümmung und falsch ausgerichteter Krümmung in gleichem Maße in Kontakt gebracht werden, wobei dann nur die Würste mit falscher Krümmung gewendet werden und die Würste mit korrekt ausgerichteter Krümmung ihre ursprüngliche Ausrichtung der Krümmung auf dem Förderelement beibehalten. Die Relativgeschwindigkeit zwischen der Wenderolle und der darunter angeordneten Fördereinrichtung wird insbesondere über die unterschiedlich zur Fördergeschwindigkeit des Förderelementes eingestellte Umlaufgeschwindigkeit am äußeren Umfang der Wenderolle erzielt.

In einer bevorzugten Ausgestaltung der Erfindung ist die Umlaufrichtung an der Umlauffläche der Wenderolle gleich wie die Förderrichtung des Förderelementes. Durch die gleichgerichtete Bewegung von Fördereinrichtung und Wenderolle ist kontrollierte Steuerung der Drehbewegung der Wurst auf der Fördereinrichtung erreicht, wodurch eine feine Abstimmung in Bezug auf die die Drehbewegung der Würste oberhalb der Fördereinrichtung steuernden Relativbewegung möglich ist. Das Überdrehen oder Überwenden einer bereits richtig ausgerichteten Wurst und das gezielte Wenden einer falsch ausgerichteten Wurst sind damit auf einfache Weise sichergestellt.

Vorzugsweise ist im Betrieb die Umlaufgeschwindigkeit an der Umlauffläche der Wenderolle höher oder geringer als die Fördergeschwindigkeit des die Würste tragenden Förderelementes. In Abhängigkeit von der Größe der Umlaufgeschwindigkeit werden die auf dem Förderelement transportierten Würste entweder in die eine Richtung oder in die entgegengesetzte Richtung gewendet. In einer bevorzugten Ausführungsform der Erfindung, bei der die Umlaufrichtung der Wenderolle gleich ist wie die Förderrichtung der Förderelemente und die Umlaufgeschwindigkeit der Wenderolle größer als die Fördergeschwindigkeit des Förderelementes ist, werden sämtliche Würste nach dem Passieren der Wendeeinrichtung mit ihren Wurstenden in Förderrichtung voran transportiert. In einer anderen Ausführungsform der Erfindung, bei der die Umlaufrichtung an der Umlauffläche der Wenderolle gleich ist wie die Förderrichtung des Förderelementes hingegen die Umlaufgeschwindigkeit der Wenderolle geringer als die Fördergeschwindigkeit des Förderelementes ist, werden sämtliche Würste nach dem Passieren der Wendeeinrichtung mit ihren Wurstrücken in Förderrichtung voran transportiert. In sämtlichen vorstehenden wie auch nachfolgenden Ausführungsformen werden die bevorzugt quer zur Förderrichtung des Förderelementes ausgerichteten Würste, abgesehen von ihrer natürlichen Krümmung, im Wesentlichen um ihre Längsachse herum gedreht. Die Wurst selbst rollt dabei mit ihrer Hülle über die Oberseite des Förderelementes der erfindungsgemäßen Vorrichtung.

Eine weitere bevorzugte Ausgestaltung der erfindungsgemäßen Vorrichtung sieht vor, dass das Förderelement wenigstens ein umlaufendes Transportband aufweist. Mithilfe eines umlaufenden Transportbandes, welches mit einer Antriebseinrichtung gekoppelt ist ist eine stetige Förderbewegung der zu transportierenden Würstchen auf einfache Weise gewährleistet. Zudem kann mithilfe eines Förderbandes eine leicht zu erzeugende Drehbewegung der Antriebseinrichtung in eine translatorische Bewegung des Transportbandes für den Transport der Würste erzeugt werden. Das Transportband weist in einer Ausführungsform ein Obertrum und ein Untertrum auf, wobei das Obertrum insbesondere die Oberseite des Förderelementes ausbildet, auf dem die Würstchen mit ihrer Längsrichtung bevorzugt quer zur Förderrichtung des Transportbandes ausgerichtet aufgelegt werden.

Vorzugsweise weist das Förderelement drei nebeneinander angeordnete, vorzugsweise voneinander getrennte Förderbänder auf, wobei die Wenderolle oberhalb des mittleren Förderbandes angeordnet ist. In einer bevorzugten Ausführungsform der Erfindung werden sämtliche Förderbänder, die bevorzugt etwa quer zur Förderrichtung nebeneinander angeordnete Einzelbänder ausbilden, über eine Antriebseinrichtung mit derselben Fördergeschwindigkeit angetrieben. Die Würste werden somit bevorzugt gleichmäßig entlang ihrer Förderstrecke bewegt, sodass an sämtlichen Abschnitten der Würste in Längsrichtung dieselben Kräfte wirken.

In einer bevorzugten Weiterbildung der erfindungsgemäßen Vorrichtung ist das mittlere Förderband mittels einer Antriebseinrichtung mit einer ersten Fördergeschwindigkeit antreibbar und die äußeren Förderbänder mittels der Antriebseinrichtung oder einer separaten Antriebseinrichtung mit einer zweiten Fördergeschwindigkeit antreibbar, wobei im Betrieb die beiden äußeren Förderbänder eine Fördergeschwindigkeit aufweisen, die verschieden ist zur Fördergeschwindigkeit des mittleren Förderbandes, vorzugsweise größer ist als die Fördergeschwindigkeit des mittleren Förderbandes. Mithilfe der äußeren Förderbänder, welche eine geringfügig größere Fördergeschwindigkeit als das mittlere Förderband aufweisen, ist insbesondere einem Überdrehen von Würsten mit bereits korrekt ausgerichteter Krümmung entgegengewirkt. Eine Wurst mit einer bereits linksseitigen Ausrichtung ihrer Krümmung wird durch eine Wenderolle, deren Umlaufgeschwindigkeit größer ist als die Fördergeschwindigkeit des Förderelementes ein Stück weit überdreht, wobei die in Förderrichtung weisenden Wurstenden sich verstärkt auf den äußeren Förderbändern gegen die am Mittenabschnitt durch die Wenderolle erzeugte Drehbewegung abstützen. Durch die höhere Fördergeschwindigkeit der äußeren Bänder wird insbesondere an den Wurstenden jedoch eine Gegenbewegung erzeugt, die dem Überdrehen wiederum bevorzugt entgegenwirkt. Der Unterschied in den Fördergeschwindigkeiten ist vorzugsweise auf eine maximale Differenz beschränkt, um eine Überlastung am Hüllmaterial der Wurst und damit ein Aufplatzen der Wursthülle der Wurst zu vermeiden.

Bevorzugt ist die Wenderolle dem mittleren Förderband und damit auch dem Mittenabschnitt der auf dem Förderelement aufliegenden und zu wendenden Wurst zugeordnet. Die Wende- bzw. Drehbewegung der Wurst ist damit in einem Abschnitt der Wurst erzeugt, der eine bevorzugt gleichmäßige Drehung der gesamten Wurst bewirkt.

Bevorzugt weisen die Oberflächen der äußeren Förderbänder eine Oberflächenrauheit auf, die verschieden ist zur Oberflächenrauheit des mittleren Förderbandes, vorzugsweise geringer ist als die Oberflächenrauheit des mittleren Förderbandes. Die Oberflächen der äußeren Förderbänder weisen eine glatte Oberfläche mit geringer Haftung auf. Insbesondere die Wurstenden von einer Wurst mit bereits korrekt ausgerichteter Krümmung gleiten über die relativ glatten Oberflächen der äußeren Förderbänder vereinfacht ab. Somit wird eine Wurst mit bereits korrekter Ausrichtung, die trotzallem an der die Wendeeinrichtung vorbei geführt wird, an einem Überdrehen gehindert. Das mittlere Förderband weist bevorzugt eine profilierte Oberfläche auf, die in Kontakt mit der darüber angeordneten Wenderolle die Drehbewegung der zu wendenden Wurst jeweils sicher umsetzt. Ein Verrutschen der Wurst relativ zum mittleren Förderband ist durch dessen profilierte Oberfläche vermieden. In einer bevorzugten Ausführungsform der Erfindung weist das mittlere Förderband aus der Ebene des Förderbandes herausstehende Vorsprünge zur Ausbildung einer Profilstruktur an der Oberfläche auf.

In einer bevorzugten Weiterbildung der erfindungsgemäßen Vorrichtung weist die Wenderolle zur Oberseite des Förderelementes einen festen Abstand auf, oder ist mittels einer Verstelleinrichtung im Abstand zur Oberseite des Förderelementes veränderlich angeordnet. Bevorzugt ist die angetriebene Wenderolle in einem festen, also unveränderlichen Abstand über dem mittleren Förderband des Förderelementes angeordnet. Bevorzugt ist der Abstand um ein vorbestimmtes Verhältnis geringer als der Durchmesser, auch bezeichnet als Kaliber, der mit dem Förderelement transportierten Würste. Vorzugsweise liegt das Verhältnis aus Abstand Oberseite zu Umfangsfläche der Wenderolle zum Kaliber der transportierten Wurst in einem Bereich von etwa 0,75 bis etwa 0,95. In einer anderen Ausgestaltung ist der Abstand zur Oberseite des Förderelementes mittels einer Verstelleinrichtung veränderlich, wobei der Abstand der Umlauffläche der Wenderolle durch die darunter hinweg geführten Würste verändert wird. Dadurch gelangt die Umlauffläche der angetriebenen Wenderolle stets sicher mit der zu wendenden, oder auch nicht zu wendenden Wurst, in Kontakt. Die Wenderolle ist dazu vorzugsweise höhenveränderlich zur Oberseite des vorzugsweise aus drei nebeneinander geteilten Förderbändern bestehenden Förderelementes angeordnet. Die Verstelleinrichtung kann ein erstes, manuell verstellbares Verstellmittel zum festen Voreinstellen des Abstandes der Wenderolle oberhalb des Förderelements aufweisen, wie beispielsweise einen von Hand betätigbaren Spindeltrieb. Zusätzlich kann die Verstelleinrichtung in einer Ausführungsform der Erfindung ein zweites, automatisiert antreibbares Verstellmittel aufweisen, das vorzugsweise über eine Steuereinrichtung der erfindungsgemäßen Vorrichtung ansteuerbar ist. Das zweite Verstellmittel kann beispielsweise als fluidbetriebener Hubzylinder oder elektrisch antreibbarer Spindelantrieb ausgebildet sein. Das zweite Verstellmittel ist bevorzugt am ersten Verstellmittel angeordnet, wobei die Wenderolle vom zweiten Verstellmittel getragen wird.

Vorzugsweise ist die im Abstand zur Oberseite des Förderelementes veränderliche Wenderolle an einem Ende eines Hebelarmes angeordnet, der um ein Drehlager beweglich aufgenommen ist. Der Abstand zwischen der Oberseite des Förderelementes und der veränderlich zur Oberseite des Förderelementes aufgenommenen Wenderolle ist im Vergleich zur festen Wenderolle deutlich geringer ausgebildet. Vorzugsweise entspricht der Abstand weniger als der Hälfte des Kalibers der zu wendenden bzw. nicht zu wendenden Wurst. Das Vorsehen eines Hebelarmes, der selbst in seinem Lagerpunkt nur um ein vorbestimmtes geringes Winkelmaß verschwenkt wird, ermöglicht eine bezogen auf seine Hebelarmlänge deutlich vergrößere Abstandsänderung am Lagerpunkt der Wenderolle. Neben der Wenderolle ist an dem einen Ende des Hebelarmes auch eine die Wenderolle bevorzugt fortwährend antreibende Antriebseinheit mit zumindest einem Antriebsmotor vorgesehen, welche die Wenderolle in eine Drehbewegung mit einer vorbestimmten Drehzahl versetzt.

In einer Weiterbildung der Erfindung ist am zur Wenderolle entgegengesetzten Ende des Hebelarmes ein die Masse der Wenderolle im Wesentlichen ausgleichendes Gegengewicht angeordnet. Über das Gegengewicht ist bewirkt, dass beim Inkontaktbringen der sich bewegenden Wurst mit der Wenderolle die Höhe der Wenderolle über dem Förderband sich mit geringem Kraftaufwand verändern lässt. Damit ist ein zu starkes Drücken der zu wendenden bzw. nicht zu wendenden Wurst in ihrem Mittenbereich vermieden. Die mittels des Förderelementes geförderten Würste behalten somit ihre vorgegebene Form über ihre Gesamtlänge bei. Bevorzugt ist einem Abschnitt des Hebelarmes ein Rücksteller angeordnet, der bewirkt, dass die Wenderolle nach Passieren der Wurst in eine voreinstellbare Ausgangshöhe über dem Förderband bewegt wird. Die nächste gegebenenfalls zu wendende Wurst gelangt damit sicher mit der im Abstand zur Oberseite des Förderelementes veränderlich aufgenommenen Wenderolle in Kontakt. Der Rücksteller kann in einer Ausführungsform der Erfindung zum Beispiel ein Federelement sein.

Gemäß einer bevorzugten Weiterbildung der erfindungsgemäßen Vorrichtung zum Ausrichten von Würsten ist eine Erfassungseinrichtung mit wenigstens einem Sensor zum Erfassen der Ausrichtung der Würste auf dem Förderelement vorgesehen, wobei der Sensor bevorzugt in Förderrichtung des Förderelementes vor der Wendeeinrichtung angeordnet ist. Mit Hilfe der Erfassungseinrichtung, welche bevorzugt ein oder mehrere Sensoren zum Erfassen der Ausrichtung der auf dem Förderelement transportierten Würste aufweist, ist die das Erkennen oder Bestimmen der Ausrichtung der Würste auf dem Förderelement, also ob die Würste eine linksseitige oder eine rechtsseitige Krümmung auf dem Förderelement haben, noch vor der Wendeeinrichtung der erfindungsgemäßen Vorrichtung möglich. Insbesondere können, in Abhängigkeit von der Ausrichtung der Würste bezogen auf ihre Krümmung, Maßnahmen getroffen werden, die beispielsweise den Kontakt der Wendeeinrichtung mit bestimmten Würsten, vorzugsweise mit Würsten, die bereits eine korrekte Ausrichtung auf dem Förderelement haben, verhindert.

Ebenfalls kann mit der erfindungsgemäßen Erfassungseinrichtung erkannt werden, ob die zu fördernden Würste eine vorbestimmte Ausrichtung auf dem Förderelement haben, insbesondere mit ihren Längsachsen in einem vorbestimmten Winkelbereich bezogen auf die Förderrichtung des Förderelementes ausgerichtet sind. Vorzugsweise ist der wenigstens eine Sensor der Erfassungseinrichtung in Förderrichtung des Förderelementes in einem Abstand vor der Wendeeinrichtung angeordnet. In einer anderen Ausführungsform umfasst die Erfassungseinrichtung mehrere Sensoren, welche bevorzugt vor der Wendeeinrichtung angeordnet, jedoch verschiedene Ausrichtungen aufweisend auf einen vorbestimmten Abschnitt des Förderelementes vor der Wendeeinrichtung gerichtet sind. Als Sensor der Erfassungseinrichtung wird zum Beispiel ein optischer Sensor, wie beispielsweise eine Kamera, verwendet.

Vorzugsweise ist die Erfassungseinrichtung mit einer Steuereinrichtung der Vorrichtung gekoppelt und dazu eingerichtet, in Abhängigkeit von der erfassten Ausrichtung der Würste auf dem Förderelement zumindest die Wendeeinrichtung oder das Förderelement anzusteuern. Bevorzugt werden in Abhängigkeit der erfassten Ausrichtung der Krümmung der Würste bestimmte Betriebsparameter an der Wendeeinrichtung und/oder dem Förderelement angepasst. Bevorzugt wird in einer Ausführung der Erfindung bei einer Wurst mit einer korrekt erfassten Ausrichtung der Krümmung auf dem Förderelement die Wendeeinrichtung derart angesteuert, dass mittels der Antriebseinheit die Umfangsgeschwindigkeit der Wenderolle auf die Geschwindigkeit des Förderelementes angepasst wird, insbesondere mit gleicher Geschwindigkeit angetrieben wird. In einer anderen Ausführung wird die Wendeeinrichtung um ein vorbestimmtes Mindestmaß mittels eines über die Steuereinrichtung ansteuerbaren Verstellmittels der Verstelleinrichtung angehoben, sodass der Abstand der Wenderolle zur Oberseite des Förderelements bevorzugt vergrößert, und die Wenderolle dann nicht mehr mit der richtig ausgerichteten Wurst in Kontakt gelangt.

In einer weiteren Ausführungsform kann anstelle der Wendeeinrichtung auch das Förderelement angesteuert werden, sodass die Fördergeschwindigkeit des Förderelementes der Fördereinrichtung in Abhängigkeit von der erfassten Ausrichtung der bevorzugt in Abständen hintereinander auf dem Förderelement angeordneten Würste angepasst wird.

In einer Weiterbildung der Erfindung ist die Umlauffläche der Wenderolle bevorzugt aus einem Material mit elastischen Eigenschaften ausgebildet. Damit sind Beschädigungen der Hülle, bzw. des Hüllmaterials der Wurst beim Inkontaktbringen mit der Umlauffläche der Wenderolle vermieden. Bevorzugt wird als Material ein Naturkautschuk verwendet, der lebensmittelgeeignet ist und keine Qualitätsbeeinträchtigung der damit in Kontakt gebrachten Würste hervorruft. Vorzugsweise ist die Umlauffläche an der Wenderolle austauschbar ausgebildet. Bevorzugt weist die Wenderolle einen Kern aus einem relativ harten Kunststoff auf, an dessen äußerer Umfangsfläche die als separates Bauteil ausgebildete, schlauchähnliche Umlauffläche angeordnet bzw. befestigt werden kann.

Vorzugsweise ist an der Umlauffläche der Wenderolle eine Profilierung ausgebildet, mit der das Drehen der Würste um ihre Längsrichtung auf vereinfachte Weise gewährleistet ist. Die Profilierung an der Umlauffläche ist bevorzugt als eine Vielzahl von an der Umlauffläche vorstehenden Materialvorsprüngen ausgebildet, die mit der Umlauffläche bevorzugt einteilig verbunden, bevorzugt mit der Umlauffläche einteilig ausgebildet sind.

Gemäß einer weiteren bevorzugten Ausführungsform wird vorgeschlagen, dass die Umlauffläche der Wenderolle konvex gekrümmt ausgebildet ist. Gemäß einer weiteren Ausführungsform der Erfindung wird vorgeschlagen, dass die Breite der Umfangsfläche der Wenderolle so gewählt ist, und vorzugsweise die Umfangsfläche der Wenderolle und die Wurst auf dem Förderelement so zueinander positioniert werden, dass die Umfangsfläche nur in einem mittleren Abschnitt mit der Wurst in Kontakt bringbar ist.

Ferner ist vorgesehen, dass der Abstand der Wenderolle zu der Oberseite des Förderelementes so an das Kaliber der Würste angepasst ist, dass die Wenderolle während des Kontakts mit einer Wurst dazu eingerichtet ist, die Wurst etwas im Wesentlichen elastisch zu verformen. Mit den obigen Weiterbildung ist die Art und Weise des Kontaktes zwischen Wenderolle und Wurst weiter optimiert und die Würste lassen sich besonders zuverlässig hinsichtlich ihrer Krümmung auf dem Förderelement ausrichten.

Ein weiterer Aspekt der Erfindung betrifft ein Verfahren zum Ausrichten von gekrümmten Würsten gemäß Anspruch 20, umfassend die Schritte: Bewegen der Würste im Abstand zueinander entlang eines vorgegebenen Förderweges, wobei die Würste mit ihrer Längsrichtung im Wesentlichen senkrecht zur Förderrichtung ausgerichtet sind; und Inkontaktbringen der in Förderrichtung bewegten Würste nacheinander mit einer Wendeeinrichtung, und Erzeugen einer Drehung der Würste im Wesentlichen um ihre Längsachse durch eine zwischen der Oberfläche der Wurst und der Wendeeinrichtung wirkende Relativbewegung. Der Erfindung liegt die Erkenntnis zugrunde, dass mithilfe der erfindungsgemäßen Verfahrensschritte Würste mit falsch ausgerichteter Krümmung relativ einfach auf einer die Würste transportierenden Fördereinrichtung gedreht werden können und Würste mit einer bereits korrekten Ausrichtung ihrer Krümmung auch mit der Wendeeinrichtung in Kontakt gelangen können, ohne dass diese dann weitergedreht, bzw. überdreht werden, sodass diese weiterhin ihre korrekte Ausrichtung beibehalten. Eine konkrete, bzw. genaue Überwachung und Erfassung der jeweiligen Ausrichtung einer Wurst auf der Fördereinrichtung ist dabei nicht notwendig. Das ermöglicht einen im Vergleich zum Stand der Technik deutlich vereinfachten Vorgang des Ausrichtens.

In einer bevorzugten Ausführungsform des erfindungsgemäßen Verfahrens wird eine oberhalb der Fördereinrichtung drehbar aufgenommene, vorzugsweise angetriebene Wenderolle verwendet, deren Umlaufgeschwindigkeit verschieden ist zur Fördergeschwindigkeit der die Würste transportierenden Fördereinrichtung. Die zur erfindungsgemäßen Vorrichtung beschriebenen, bevorzugten Ausführungsformen, bzw. Weiterbildungen sind zugleich auch bevorzugte Ausführungsformen des erfindungsgemäßen Verfahrens zum Ausrichten von Würsten.

Auch bereits in der "richtigen" Ausrichtung auf dem Förderband ankommende Würstchen kommen in Kontakt mit der Oberfläche der Wenderolle, werden aber aufgrund ihrer Krümmung durch die beiden distalen Endabschnitte nicht in Rotation im Wesentlichen um ihre Längsachse versetzt, da die distalen Endabschnitte die Wurst an einer Rotation hindern. Kommt eine Wurst in der "falschen" Ausrichtung hinsichtlich ihrer Krümmung in den Einflussbereich der Wenderolle, so wird die Wurst während des Kontaktes aufgrund der Rotationsgeschwindigkeit der Wenderolle, die bevorzugt etwas größer ist als die entsprechende Fördergeschwindigkeit des Förderbandes, aufgrund der Reibung zwischen Wenderolle und Oberfläche der Wurst in Rotation versetzt, im Wesentlichen um die Längsachse der gekrümmten Wurst. Aufgrund der höheren Rotationsgeschwindigkeit der Wenderolle werden die distalen Enden der gekrümmten Wurst rotiert in Richtung weg von der Oberfläche des Förderbandes, so dass sie um etwa 180° gedreht werden, bis die distalen Enden wieder in Kontakt mit der Oberfläche des Förderbandes kommen. Die Wurst wird aufgrund des Eingriffs mit der angetriebenen Wenderolle gewissermaßen umgeschlagen und zwar um etwa 180°. Anschließend ist die Wurst nach der Beeinflussung durch die Wenderolle hinsichtlich der Krümmung genau anders auf dem Förderband liegend und somit in der "richtigen" Ausrichtung hinsichtlich der Krümmung ausgerichtet. Mit anderen Worten werden richtig ausgerichtete Würste durch die Wenderolle mit ihren distalen Enden gewissermaßen in Richtung auf das Förderband gedrückt, aber dann nicht rotiert um ihre Längsachse, während hingegen falsch ausgerichtete Würste durch den Einfluss der Wenderolle mit den distalen Enden der Wurst weg von dem Förderband rotiert werden und dann um etwa 180° um die - gekrümmte - Längsachse der Wurst gedreht werden und anschließend genau umgedreht ausgerichtet hinsichtlich ihrer Krümmung auf dem Förderband liegen. So lässt sich auf einfache und effektive Weise eine Ausrichtung dergestalt erzielen, dass nach dem Durchlaufen der Wurst vorbei an der Wenderolle alle Würstchen gleichmäßig hinsichtlich ihrer Krümmung ausgerichtet auf dem Förderband liegen. Die Wenderolle ist hinsichtlich Ihres Abstandes oberhalb des Förderelementes veränderlich gehalten.

Gemäß einer bevorzugten Weiterbildung des erfindungsgemäßen Verfahrens kann die Ausrichtung der Krümmung der Wurst vor dem Inkontaktbringen mit der Wenderolle der Wendeeinrichtung auch erfasst bzw. erkannt werden. Das Erkennen bzw. das Erfassen der Ausrichtung der Krümmung der Wurst erfolgt bevorzugt in einem ausreichenden Abstand der Wurst auf dem Förderelement vor der Wendeeinrichtung mittels einer Erfassungseinrichtung zum Erfassen der Ausrichtung der Würste. In Abhängigkeit von der "richtigen" oder "falschen" Ausrichtung der Krümmung der Wurst auf dem Förderelement werden von der Erfassungseinrichtung entsprechende Signale an eine Steuereinrichtung der erfindungsgemäßen Vorrichtung übermittelt. Mittels der Steuereinrichtung erfolgt vorzugsweise ein Ansteuern der Wendeeinrichtung, insbesondere das Verändern der Umlaufgeschwindigkeit der Wenderolle bzw. das Anpassen des Abstandes der Wendeeinrichtung oberhalb des die Würste transportierenden Förderelementes. In einer bevorzugten Ausführungsform der Erfindung kann anstelle des Anpassens der Betriebsparameter der Wendeeinrichtung auch eine Anpassung der Betriebsparameter, bevorzugt der Fördergeschwindigkeit, der die Würste transportierenden Fördereinrichtung vorgenommen werden.

Die zur erfindungsgemäßen Vorrichtung beschriebenen bevorzugten Ausführungsformen bzw. Weiterbildungen sind zugleich auch bevorzugte Ausführungsformen des erfindungsgemäßen Verfahrens zum Ausrichten von gekrümmten Würsten.

Die Erfindung wird im Folgenden anhand eines bevorzugten Ausführungsbeispiels unter Bezugnahme auf die beigefügten Figuren näher beschrieben. Hierbei zeigen:
- Fig. 1: eine perspektivische Ansicht einer erfindungsgemäßen Vorrichtung zum Ausrichten von Würsten;
- Fig. 2: eine Vorderansicht der erfindungsgemäßen Vorrichtung nach Fig. 1;
- Fig. 3: eine Draufsicht auf die erfindungsgemäße Vorrichtung nach Fig. 1;
- Fig. 4: eine Seitenansicht der erfindungsgemäßen Vorrichtung nach Fig. 1;
- Fig. 5: eine Draufsicht auf eine Vorrichtung gemäß einer zweiten Ausführungsform;
- Fig. 6: eine vergrößerte Ansicht der Einkreisung V aus Fig. 5;
- Fig. 7: eine Seitenansicht einer erfindungsgemäßen Vorrichtung gemäß der zweiten Ausführungsform, und
- Fig. 8: eine Detailansicht der zweiten Ausführungsform gemäß der Einkreisung VII aus Fig. 8.

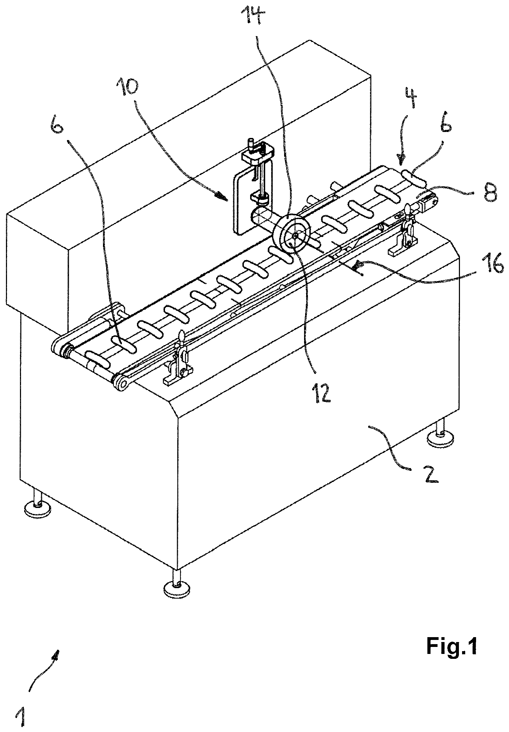

In Fig. 1 ist eine Vorrichtung 1 zum Ausrichten von Würsten gezeigt, welche ein Maschinengestell 2 aufweist. Mit dem Maschinengestell 2 wird eine Fördereinrichtung 4 getragen, welche dazu eingerichtet ist, Würste 6 entlang einer Förderstrecke zu transportieren. Die Würste 6 werden in einem vorbestimmten Abstand zueinander und mit ihrer Längsachse im Wesentlichen senkrecht zur Förderrichtung des Förderelementes 4 aufgelegt.

Die Fördereinrichtung 4 umfasst ein umlaufendes Förderelement 8, welches in einer Ausführungsform als Förderband ausgebildet ist. Oberhalb der Fördereinrichtung 4 ist eine Wendeeinrichtung 10 mit einer Wenderolle 12 angeordnet. Die Wendeeinrichtung 10 ist dazu eingerichtet, die auf dem Förderelement 8 transportierten Würste 6 nacheinander so auf der Fördereinrichtung 4 auszurichten, vorzugsweise so zu wenden, dass die etwa quer zur Förderrichtung des Förderelementes 8 ausgerichteten Würste 6 mit ihren Krümmungen dann auf dem Förderelement 6 eine identische Ausrichtung aufweisen.

In einer Ausführungsform der Erfindung ist die Wendeeinrichtung 10 mit ihrer Wenderolle 12 dazu eingerichtet, die Würste 6 auf dem Förderelement 8 so ausrichten zu können, dass die Würste 6 nach dem Passieren der Wendeeinrichtung dann entweder eine linksseitige Krümmung oder eine rechtsseitige Krümmung auf dem Förderelement 8 haben. Die Wenderolle 12 greift insbesondere mit einer Umlauffläche 14 an einem Abschnitt der Wurst 6 auf dem Förderelement 8 an. Die Wenderolle 12 ist mit ihrer Rotationsachse 16 insbesondere senkrecht zur Förderrichtung 18 der Fördereinrichtung 4 ausgerichtet.

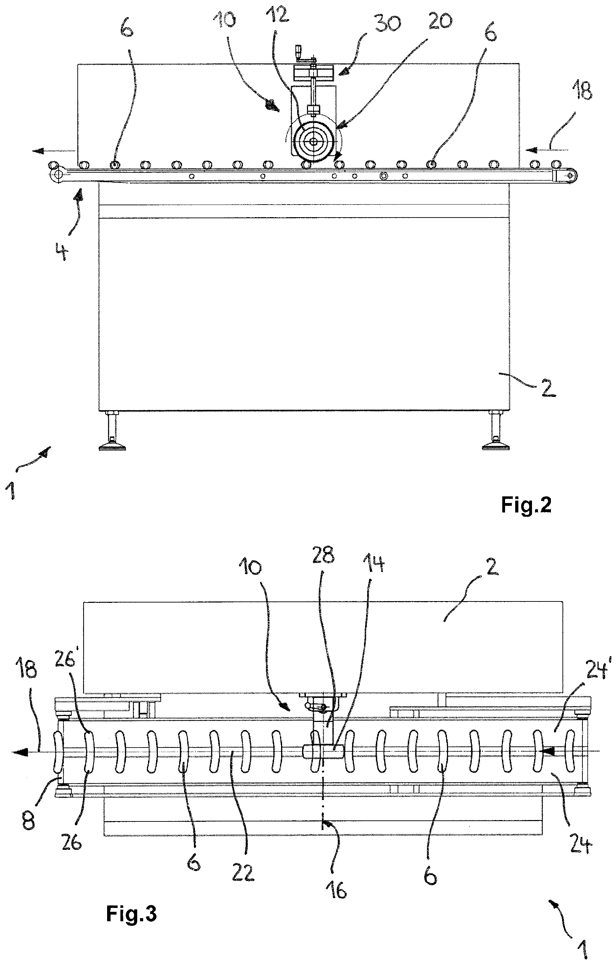

Die Wenderolle 12 ist mittels einer motorischen Antriebseinheit 28 antreibbar. Die Antriebseinheit weist vorzugsweise einen Elektromotor auf sowie ein Getriebe aufweist. Die Wenderolle 12 ist rotierbar gelagert und weist im Betrieb an der Umlauffläche 14 eine Umlaufgeschwindigkeit auf, die verschieden ist zur Fördergeschwindigkeit der Fördereinrichtung 4. In der in Fig.2 gezeigten Ausführungsform ist die Umlaufgeschwindigkeit an der Umlauffläche 14 der Wenderolle 12 größer als die Fördergeschwindigkeit des Förderelementes 8 der Fördereinrichtung 4, sodass die Würste 6, nachdem diese mit der Wendeeinrichtung in Kontakt gelangt sind eine identische Ausrichtung mit einer linksseitigen Krümmung bzw. Linkskrümmung (Fig. 3) erlangen. Wie aus Fig. 2 ferner ersichtlich, ist die Umlaufrichtung 20 der Wenderolle 12 auf der dem Förderelement 8 zugewandten Seite der Wenderolle 12 identisch zur Förderrichtung 18 des Förderelementes 8.

Fig. 3 zeigt, dass das Förderelement 8 aus drei nebeneinander angeordneten und voneinander getrennten Förderbänder 22, 24, 24' ausgebildet ist. Die Wenderolle 12 ist dabei oberhalb des mittleren Förderbandes 22 angeordnet. In der gezeigten Ausführungsform werden sämtliche Förderbänder 22, 24, 24' mit derselben Fördergeschwindigkeit durch einen nicht näher dargestellten Förderantrieb der Vorrichtung 1 angetrieben. Das Förderband 22 unterscheidet sich von den Förderbändern 24, 24' durch seine größere Oberflächenrauheit. Zusammen mit der Wendeeinrichtung 10 soll das Förderband 22 das sichere Wenden der Würste 6 gewährleisten. Die Förderbänder 24, 24' weisen in einer bevorzugten Ausführungsform eine Ebene, bzw. glatte Oberfläche mit einer geringen Oberflächenrauheit auf, wodurch sichergestellt ist, dass insbesondere Würste 6 mit einer bereits korrekten Ausrichtung auf dem Förderelement 8 mittels der erfindungsgemäßen Wendeeinrichtung 10 nicht auf der Fördereinrichtung 4 überdreht werden, sodass diese dann mit ihren Wurstenden 26, 26' letztendlich in die falsche Richtung weisen würden.

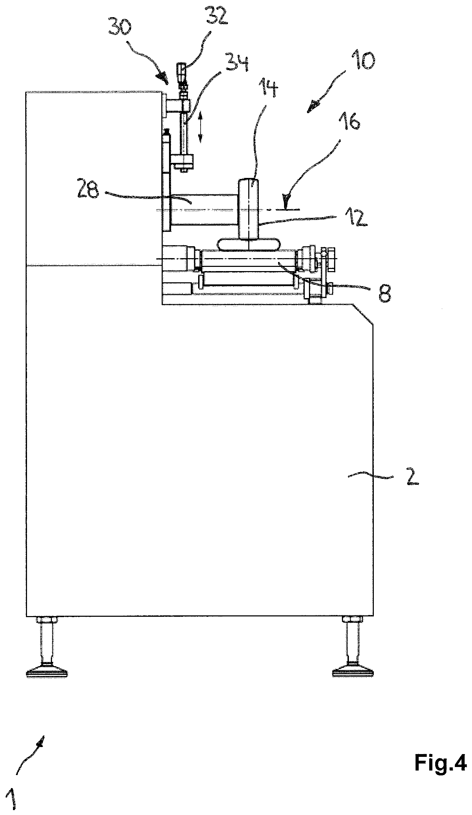

In Fig. 4 ist eine Seitenansicht der erfindungsgemäßen Vorrichtung 1 gezeigt, welche verdeutlicht, dass die Wenderolle 12 in einem vorbestimmten Abstand oberhalb des Förderelementes 8, vorzugsweise direkt oberhalb des mittleren Förderbandes 22 angeordnet ist. Der Abstand zwischen der Umlauffläche 14 und dem Förderelement 8, insbesondere dem mittleren Förderband 22, ist dabei so gewählt, dass dieser geringer ist als der Durchmesser der Würste 6. In einer Ausführungsform liegt der Abstand der Umlauffläche 14 zur Oberseite des Förderelementes 6 im Verhältnis zum Durchmesser der zu wendenden Würste 6 in einem Bereich zwischen 0,75 und 0,95.

Die Wenderolle 12, welche mittels der Antriebseinheit 28 in eine gleichmäßige Drehbewegung versetzt wird, weist in einer Ausführungsform einen festen Abstand zur Oberseite des Förderelementes 6 auf. In der hier gezeigten Ausführungsform ist der Abstand zwischen der Wenderolle 12 zur Oberseite des Förderelementes 6 veränderlich. Am Maschinengestell 2 ist dazu eine Verstelleinrichtung 30 zur Höhenverstellung der Wendeeinrichtung 10 vorgesehen. In der gezeigten Ausführungsform weist die Verstelleinrichtung 30 zur Höhenverstellung einen von Hand betätigbaren Stellhebel 32 auf, der über eine Spindel 34 eine Höhenverstellung der Wendeeinrichtung 10 bewirkt.

In einer nicht gezeigten Ausführungsform der Erfindung weist die Wendeeinrichtung 10 eine Wenderolle auf, die an einem Ende eines am Maschinengestell 2 schwenkbar angelenkten Hebelarmes angeordnet ist.

Ferner ist, wie aus den Figuren zu entnehmen, die mit den Würsten 6 in Kontakt gelangende Umlauffläche 14 der Wenderolle 12 aus einem Material mit weich-elastischen Eigenschaften ausgebildet. In einer nicht gezeigten Ausführungsform der Erfindung sind an der Umlauffläche 14 der Wenderolle 12 Profilierungen für eine wirksame Übertragung des durch die Wenderolle erzeugten Drehmomentes auf die einzelnen Würste 6 ausgebildet. Mit der Wendeeinrichtung 10 werden die Würste auf der Fördereinrichtung 4 durch eine bestehende Relativbewegung zwischen der Wenderolle 12 und dem Förderelement 8 oberhalb des Förderelementes um ihre Längsachse in etwa um ein Winkelmaß von etwa 180° gedreht. Die Relativbewegung zwischen Wenderolle 12 und Fördereinrichtung 4 wird mittels der voneinander abweichenden Dreh- und Fördergeschwindigkeiten erzeugt.

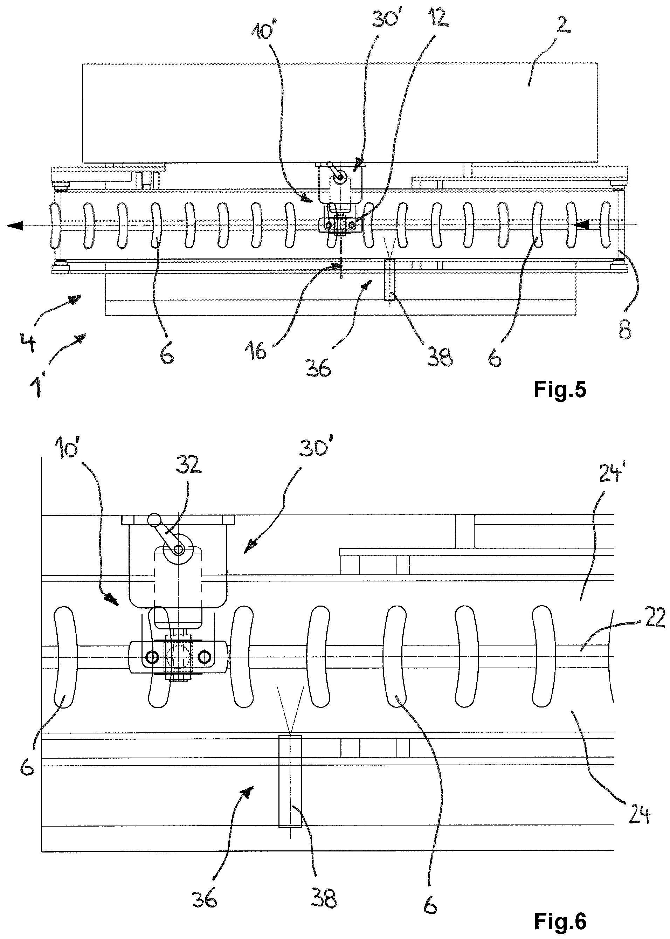

In Fig. 5 ist eine zweite Ausführungsform einer erfindungsgemäßen Vorrichtung 1' in einer Draufsicht gezeigt, welche ein Maschinengestell 2 mit einer daran angeordneten Fördereinrichtung 4 für die darauf zu fördernden und entsprechend auszurichtenden Würste 6 aufweist. Zum Transportieren der Würste weist die Fördereinrichtung 4 ein Förderelement 8 auf. Oberhalb der Fördereinrichtung 4 ist eine Wendeeinrichtung 10' mit einer Wenderolle 12 angeordnet, mit Hilfe derer Würste 6, welche eine "falsche" Ausrichtung ihrer Krümmung auf der Fördereinrichtung 4 aufweisen, in die entsprechend gewünschte "richtige" Ausrichtung überführt werden, wie oben zur ersten Ausführungsform der Vorrichtung gemäß Fig. 1 bis 4 beschrieben.

Die in den Fig. 5 und 6 gezeigte Ausführungsform der Vorrichtung 1' umfasst ferner eine Erfassungseinrichtung 36 zum Erfassen der Ausrichtung der Würste auf dem Förderelement mit zumindest einem optischen Sensor 38, der die Ausrichtung der Krümmung der Würste 6 auf dem Förderelement 8 erfasst bzw. erkennt. Die Ausrichtung der Würste 6 auf dem Förderelement 8 erfolgt durch die Erfassungseinrichtung 36 in einem Abstand vor der Wendeeinrichtung 10'. In Abhängigkeit davon, ob die transportierten Würste 6 die gewünschte Ausrichtung auf dem Förderelement 8 haben oder nicht, wird die Wendeeinrichtung und/oder das Förderelement 8 derart angesteuert, dass falsch ausgerichtete Würste 6 durch die Wenderolle 12 auf dem Förderelement 8 gedreht und bereits richtig ausgerichtete Würste 6 auf dem Förderelement 8 nicht gedreht werden. In einer Ausführungsform der Erfindung wird zum Drehen bzw. zum Umschlagen der Würste 6 auf dem Förderelement 8 eine Relativgeschwindigkeit zwischen der Umfangsgeschwindigkeit der Wenderolle 12 und der Fördergeschwindigkeit des Förderelementes 8 generiert. Sollen die Würste ihre Ausrichtung auf dem Förderelement beibehalten, wird in der vorliegenden Ausführungsform die Umlaufgeschwindigkeit der Wenderolle 12 an die Fördergeschwindigkeit des Förderelementes 8 angepasst, sodass diese beide gleich groß sind und somit keine Relativbewegung der Wurst 6 zur Oberseite des Förderelementes 8 mittel der Wenderolle 12 erzeugt wird.

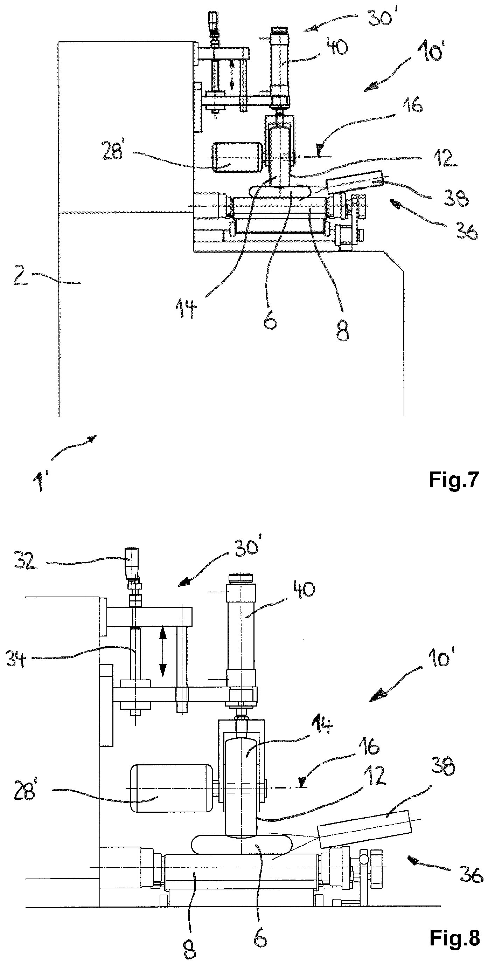

Fig. 7 zeigt eine Seitenansicht der Vorrichtung 1' mit der an dem Maschinengestell 2 angeordneten Fördereinrichtung 4 und der oberhalb des Förderelementes 8 der Fördereinrichtung 4 angeordneten Wendeeinrichtung 10' mit der Wenderolle 12. Die Wenderolle 12 hat eine Umlauffläche 14, welche zum Drehen der Würste 6 auf dem Förderelement 8 mit den Würsten 6 in Kontakt gebracht wird. Wird durch den in Förderrichtung 18 vor der Wendeeinrichtung 10' angeordneten optischen Sensor 38 der Erfassungseinrichtung 36 erfasst bzw. erkannt, dass die Wurst auf dem Förderelement 8 eine korrekte Ausrichtung hat, so kann in einer Ausführungsform der erfindungsgemäßen Vorrichtung die Höhe der Wendeeinrichtung 10' über dem Förderelement 8, insbesondere der Abstand der Umlauffläche 14 der Wenderolle 12 zur Oberseite des Förderelementes 8, mittels der Verstelleinrichtung 30' verändert werden.

Die Verstelleinrichtung 30' weist in der gezeigten Ausführung ein erstes, manuell verstellbares Verstellmittel für ein mögliches mechanisches festen Verstellen bzw. Voreinstellen des Abstandes der Wenderolle 12 oberhalb des Förderelementes 8 mittels des Stellhebels 32 und der Spindel 34 auf. Zusätzlich ist ein zweites Verstellmittel an der Verstelleinrichtung 30' vorgesehen, mit dem die Höhe der Wenderolle 12 über einen Hubzylinder 40, als zweites Verstellmittel, automatisiert angepasst werden kann. Der Hubzylinder 40 ist mit einer nicht gezeigten fluidbetriebenen Stelleinrichtung fluidleitend verbunden. In einer Ausführungsform der Erfindung erfolgt die Ansteuerung der fluidbetriebenen Stelleinrichtung mit ihrem Hubzylinder 40 über eine nicht näher dargestellte elektronische Steuereinheit der Vorrichtung 1', welche mit der Erfassungseinrichtung 36 zum Erfassen der Ausrichtung der Würste auf dem Förderelement 8 signalübertragend gekoppelt oder verbunden ist.

Fig. 8 zeigt eine Detailansicht der erfindungsgemäßen Wendeeinrichtung 10' mit ihrer Wenderolle 12 und der die Wenderolle 12 aufnehmenden Verstelleinrichtung 30'. Die Antriebseinheit 28' für die Wenderolle 12 ist ebenfalls mittels der Verstelleinrichtung 30' gehalten. In der gezeigten Ausführungsform der Erfindung ist die Antriebseinheit 28 koaxial zur Rotationsachse 16 der Wenderolle 12 angeordnet ist. Die Wenderolle 12 umfasst wie auch im vorherigen Ausführungsbeispiel eine konvex geformte Umlauffläche 14 aus bevorzugt einem Material mit weichelastischen Eigenschaften, welche mit einem Mittenabschnitt einer zu wendenden Wurst in Kontakt gebracht wird.

Gleiche oder ähnliche Bauteile sind mit denselben Bezugszahlen bezeichnet.

### Bezugszeichenliste

- 1, 1': Vorrichtung
- 2: Maschinengestell
- 4: Fördereinrichtung
- 6: Würste
- 8: Förderelement
- 10, 10': Wendeeinrichtung
- 12: Wenderolle
- 14: Umlauffläche
- 16: Rotationsachse
- 18: Förderrichtung
- 20: Umlaufrichtung
- 22: Förderband
- 24, 24': Förderband
- 26, 26': Wurstenden
- 28, 28': Antriebseinheit
- 30, 30': Verstelleinrichtung
- 32: Stellhebel
- 34: Spindel
- 36: Erfassungseinrichtung
- 38: Sensor
- 40: Hubzylinder

## Patentansprüche

1. Vorrichtung (1, 1') zum Ausrichten von gekrümmten Würsten (6, aufweisend
eine Fördereinrichtung (4) zum Transportieren der Würste (6) entlang einer Förderstrecke, mit einem vorzugsweise umlaufenden Förderelement (8), auf welchem die Würste in Abständen zueinander und mit ihrer Längsachse im Wesentlichen senkrecht zur Förderrichtung des Förderelementes (8) auflegbar sind,
**gekennzeichnet durch** eine Wendeeinrichtung (10, 10'), welche oberhalb des Förderelementes (8) angeordnet und dazu eingerichtet ist, mit einer Wurst (6) in Kontakt gebracht zu werden und durch Drehen der Würste (6) im Wesentlichen um ihre Längsachse durch eine zwischen der Wurst (6) und der Wendeeinrichtung (10, 10') vorherrschende Relativbewegung die etwa quer zur Förderrichtung des Förderelementes ausgerichteten Würste (6) hinsichtlich ihren Krümmungen auf dem Förderelement identisch auszurichten.

2. Vorrichtung nach Anspruch 1,
**dadurch gekennzeichnet, dass** die Wendeeinrichtung (10, 10') dazu eingerichtet ist, die Würste (6) auf dem Förderelement (8) so zu wenden, dass die Krümmungen der Würste (6) jeweils linksseitig oder rechtsseitig ausgerichtet sind.

3. Vorrichtung nach Anspruch 1 oder 2,
**dadurch gekennzeichnet, dass** die Wendeeinrichtung (10, 10') eine oberhalb des Förderelementes angeordnete, rotierbare vorzugsweise angetriebene Wenderolle (12) mit einer an einem Abschnitt der Wurst (6) angreifenden Umlauffläche (14) aufweist, deren Rotationsachse im Wesentlichen senkrecht zur Förderrichtung des Förderelementes (8) ausgerichtet ist.

4. Vorrichtung nach Anspruch 3,
**dadurch gekennzeichnet, dass** die Wenderolle (12) mittels einer Antriebseinheit (28, 28') antreibbar ist und im Betrieb eine Umlaufgeschwindigkeit an ihrer mit der Wurst (6) in Kontakt bringbaren Umlauffläche (14) aufweist, die verschieden ist zur Fördergeschwindigkeit des Förderelementes (8).

5. Vorrichtung nach Anspruch 3 oder 4,
**dadurch gekennzeichnet, dass** die Umlaufrichtung (20) an der Umlauffläche (14) der Wenderolle (12) gleich ist, wie die Förderrichtung (18) des Förderelementes (8).

6. Vorrichtung nach Anspruch 4 oder 5,
**dadurch gekennzeichnet, dass** die Umlaufgeschwindigkeit der Wenderolle (12) höher oder geringer ist, als die Fördergeschwindigkeit des die Würste tragenden Förderelementes (8).

7. Vorrichtung nach einem der vorstehenden Ansprüche,
**dadurch gekennzeichnet, dass** das Förderelement (8) wenigstens ein umlaufendes Transportband (22, 24, 24') aufweist.

8. Vorrichtung nach einem der Ansprüche 3 bis 7,
**dadurch gekennzeichnet, dass** das Förderelement (8) drei nebeneinander angeordnete, vorzugsweise voneinander getrennte Förderbänder (22, 24, 24') aufweist, wobei die Wenderolle (12) oberhalb des mittleren Förderbandes (22) angeordnet ist.

9. Vorrichtung nach Anspruch 8,
**dadurch gekennzeichnet, dass** das mittlere Förderband (22) mittels einer Antriebseinrichtung mit einer ersten Fördergeschwindigkeit antreibbar ist, und dass die äußeren Förderbänder (24, 24') mittels der Antriebseinrichtung oder einer separaten Antriebseinrichtung mit einer zweiten Fördergeschwindigkeit antreibbar sind, wobei im Betrieb die beiden äußeren Förderbänder (24, 24') eine Fördergeschwindigkeit aufweisen, die verschieden ist zur Fördergeschwindigkeit des mittleren Förderbandes (22), vorzugsweise größer ist als die Fördergeschwindigkeit des mittleren Förderbandes (22).

10. Vorrichtung nach Anspruch 8 oder 9,
**dadurch gekennzeichnet, dass** die Oberflächen der äußeren Förderbänder (24, 24') eine Oberflächenrauheit aufweisen, die verschieden ist zur Oberflächenrauheit des mittleren Förderbandes (22), vorzugsweise geringer ist als die Oberflächenrauheit des mittleren Förderbandes (22).

11. Vorrichtung nach einem der Ansprüche 3 bis 10,
**dadurch gekennzeichnet, dass** die Wenderolle (12) zur Oberseite des Förderelementes (8) einen festen Abstand aufweist oder mittels einer Verstelleinrichtung im Abstand zur Oberseite des Förderelementes (8) veränderlich ist.

12. Vorrichtung nach Anspruch 11,
**dadurch gekennzeichnet, dass** die im Abstand zur Oberseite des Förderelementes (8) veränderliche Wenderolle (12) an einem Ende eines Hebelarms angeordnet ist, der um ein Drehlager beweglich aufgenommen ist.

13. Vorrichtung nach Anspruch 12,
**dadurch gekennzeichnet, dass** am zur Wenderolle (12) entgegengesetzten Ende des Hebelarms ein die Masse der Rolle im Wesentlichen ausgleichendes Gegengewicht angeordnet ist.

14. Vorrichtung nach einem der vorstehenden Ansprüche,
**gekennzeichnet durch** eine Erfassungseinrichtung (36) mit wenigstens einem Sensor (38) zum Erfassen der Ausrichtung der Würste (6) auf dem Förderelement (8), wobei der Sensor (38) bevorzugt in Förderrichtung des Förderelementes (8) vor der Wendeeinrichtung (10') angeordnet ist.

15. Vorrichtung nach Anspruch 14,
**dadurch gekennzeichnet, dass** die Erfassungseinrichtung (36) mit einer Steuereinrichtung der Vorrichtung (1') gekoppelt und dazu eingerichtet ist, in Abhängigkeit von der erfassten Ausrichtung der Würste (6) auf dem Förderelement (8), zumindest die Wendeeinrichtung (10') und/oder das Förderelement (8) anzusteuern.

16. Vorrichtung nach einem der Ansprüche 3 bis 15,
**dadurch gekennzeichnet, dass** die Umlauffläche (14) der Wenderolle (12) aus einem Material mit weichelastischen Eigenschaften ausgebildet ist.

17. Vorrichtung nach einem der Ansprüche 3 bis 16,
**dadurch gekennzeichnet, dass** an der Umlauffläche (14) der Wendeolle (12) eine Profilierung ausgebildet ist und/ oder die Umlauffläche (14) der Wenderolle (12) konvex gekrümmt ausgebildet ist.

18. Vorrichtung nach mindestens einem der Ansprüche 3 bis 17,
**dadurch gekennzeichnet, dass** die Breite der Umfangsfläche (14) der Wenderolle (12) so gewählt ist, und vorzugsweise die Umfangsfläche (14) der Wenderolle (12) und die Wurst auf dem Förderelement so zueinander positioniert sind, dass die Umfangsfläche (14) nur in einem mittleren Abschnitt mit der Wurst (6) in Kontakt brinbar ist.

19. Vorrichtung nach mindestens einem der Ansprüche 3 bis 18,
**dadurch gekennzeichnet, dass** der Abstand der Wenderolle (12) zu der Oberseite des Förderelementes (8) so an das Kaliber der Würste (6) angepasst ist, dass die Wenderolle (12) während des Kontakts mit einer Wurst (6) die Wurst (6) etwas im Wesentlichen elastisch verformt.

20. Verfahren zum Ausrichten von gekrümmten Würsten (6) umfassend die Schritte:
- Bewegen der Würste (6) im Abstand zueinander entlang eines vorgegebenen Förderweges, wobei die Würste (6) mit ihrer Längsachse im Wesentlichen senkrecht zur Förderrichtung ausgerichtet sind;
- Inkontaktbringen der in Förderrichtung bewegten Würste (6) nacheinander mit einer Wendeeinrichtung (10, 10'), und
- Erzeugen einer Drehung der Würste (6) im Wesentlichen um ihre Längsachse durch eine zwischen der Wurst (6) und der Wendeeinrichtung (10, 10') vorherrschende Relativbewegung.

## Claims

1. Apparatus (1, 1') for orienting curved sausages (6) having a conveyor device (4) for transporting the sausages (6) along a conveyor path, with a preferably circulating conveyor element (8) on which the sausages can be placed at mutual spacings and with their longitudinal axis substantially perpendicular to the conveyor direction of the conveyor element (8),
**characterised by** a turning device (10, 10') which is arranged above the conveyor element (8) and is adapted to be brought into contact with a sausage (6) and to orient the sausages (6) oriented approximately transversely relative to the conveyor direction of the conveyor element in identical relationship in respect of their curvatures on the conveyor element by turning the sausages (6) substantially about their longitudinal axis with a relative movement prevailing between the sausage (6) and the turning device (10, 10').

2. Apparatus according to claim 1
**characterised in that** the turning device (10, 10') is adapted to turn the sausages (6) on the conveyor element (8) such that the curvatures of the sausages (6) are respectively oriented to the left side or the right side.

3. Apparatus according to claim 1 or claim 2
**characterised in that** the turning device (10, 10') has a rotatable and preferably driven turning roller (12) which is arranged above the conveyor element and has a rotational surface (14) engaging a portion of the sausage (6) and the axis of rotation of which is oriented substantially perpendicularly to the conveyor direction of the conveyor element (8).

4. Apparatus according to claim 3
**characterised in that** the turning roller (12) is drivable by means of a drive unit (28, 28') and in operation has a rotational speed at its rotational surface which can be brought into contact with the sausage (6), which is different from the conveyor speed of the conveyor element (8).

5. Apparatus according to claim 3 or claim 4
**characterised in that** the rotational direction (20) at the rotational surface (14) of the turning roller (12) is the same as the conveyor direction (18) of the conveyor element (8).

6. Apparatus according to claim 4 or claim 5
**characterised in that** the rotational speed of the turning roller (12) is greater or lesser than the conveyor speed of the conveyor element (8) carrying the sausages.

7. Apparatus according to one of the preceding claims
**characterised in that** the conveyor element (8) has at least one circulating transport belt (22, 24, 24').

8. Apparatus according to one of the claims 3 to 7
**characterised in that** the conveyor element (8) has three mutually juxtaposed conveyor belts (22, 24, 24') which are preferably separated from each other, wherein the turning roller (12) is arranged above the central conveyor belt (22).

9. Apparatus according to claim 8
**characterised in that** the central conveyor belt (22) is drivable at a first conveyor speed by means of a drive device and the outer conveyor belts (24, 24') are drivable at a second conveyor speed by means of the drive device or a separate drive device, wherein in operation the two outer conveyor belts (24, 24') involve a conveyor speed which is different from the conveyor speed of the central conveyor belt (22) and is preferably greater than the conveyor speed of the central conveyor belt (22).

10. Apparatus according to claim 8 or claim 9
**characterised in that** the surfaces of the outer conveyor belts (24, 24') have a surface roughness which is different from the surface roughness of the central conveyor belt (22) and preferably less than the surface roughness of the central conveyor belt (22).

11. Apparatus according to one of claims 3 to 10
**characterised in that** the turning roller (12) is at a fixed spacing relative to the top side of the conveyor element (8) or is variable by means of an adjusting device in respect of the spacing relative to the top side of the conveyor element (8).

12. Apparatus according to claim 11
**characterised in that** the turning roller (12) which is variable in respect of the spacing relative to the top side of the conveyor element (8) is arranged at an end of a lever arm which is carried moveably about a rotary bearing.

13. Apparatus according to claim 12
**characterised in that** arranged at the end of the lever arm, that is opposite to the turning roller (12), is a counterweight which substantially compensates for the mass of the roller.

14. Apparatus according to one of the preceding claims
**characterised by** a detection device (36) having at least one sensor (38) for detecting the orientation of the sausages (6) on the conveyor element (8), wherein the sensor (38) is preferably arranged before the turning device (10') in the conveyor direction of the conveyor element (8).

15. Apparatus according to claim 14
**characterised in that** the detection device (36) is coupled to a control device of the apparatus (1') and is adapted in dependence on the detected orientation of the sausages (6) on the conveyor element (8) to actuate at least the turning device (10') and/or the conveyor element (8).

16. Apparatus according to one of claims 3 to 15
**characterised in that** the rotational surface (14) of the turning roller (12) is made from a material having soft-elastic properties.

17. Apparatus according to one of claims 3 to 16
**characterised in that** a profiling is provided at the rotational surface (14) of the turning roller (12) and/or the rotational surface (14) of the turning roller (12) is of a convexly curved configuration.

18. Apparatus according to at least one of the claims 3 to 17
**characterised in that** the width of the rotational surface (14) of the turning roller (12) is so selected and preferably the rotational surface (14) of the turning roller (12) and the sausage on the conveyor element are so positioned relative to each other that the rotational surface (14) can be brought into contact with the sausage only in a central portion.

19. Apparatus according to at least one of the claims 3 to 18
**characterised in that** the spacing of the turning roller (12) relative to the top side of the conveyor element (8) is so matched to the calibre of the sausages (6) that the turning roller (12) somewhat substantially elastically deforms the sausage (6) during the contact with a sausage (6).

20. A method of orienting curved sausages (6) including the steps:
- moving the sausages (6) at a spacing relative to each other along a predetermined conveyor path, wherein the sausages (6) are oriented with their longitudinal axis substantially perpendicularly to the conveyor direction; and
- bringing the sausages (6) moved in the conveyor direction successively into contact with a turning device (10, 10'), and
- generating of a rotation of the sausages (6) substantially about their longitudinal axis by a relative movement prevailing between the sausage (6) and the turning device (10, 10').

## Revendications

1. Dispositif (1, 1') d'alignement de saucisses (6) incurvées, présentant un système de transport (4) pour le transport des saucisses (6) le long d'une voie de transport, avec un élément de transport (8) de préférence en courbe, sur lequel les saucisses peuvent être déposées à distances les unes des autres et avec leur axe longitudinal sensiblement perpendiculairement au sens de transport de l'élément de transport (8),
**caractérisé par** un système de retournement (10, 10') qui est agencé au-dessus de l'élément de transport (8) et aménagé afin d'être amené en contact avec une saucisse (6) et d'aligner de manière identique par rotation des saucisses (6) sensiblement autour de leur axe longitudinal par un mouvement relatif dominant entre la saucisse (6) et le système de retournement (10, 10') des saucisses (6) alignées à peu près transversalement au sens de transport de l'élément de transport en ce qui concerne leurs courbures sur l'élément de transport.

2. Dispositif selon la revendication 1,
**caractérisé en ce que** le système de retournement (10, 10') est aménagé afin de retourner les saucisses (6) sur l'élément de transport (8) de sorte que les courbures des saucisses (6) soient alignées respectivement côté gauche ou côté droit.

3. Dispositif selon la revendication 1 ou 2,
**caractérisé en ce que** le système de retournement (10, 10') présente un rouleau de retournement (12) entraîné, de préférence rotatif, agencé au-dessus de l'élément de transport avec une surface périphérique (14) agissant sur une section de la saucisse (6), dont l'axe de rotation est orienté sensiblement perpendiculairement au sens de transport de l'élément de transport (8).

4. Dispositif selon la revendication 3,
**caractérisé en ce que** le rouleau de retournement (12) peut être entraîné au moyen d'une unité d'entraînement (28, 28') et présente en fonctionnement une vitesse périphérique au niveau de sa surface périphérique (14) pouvant être amenée en contact avec la saucisse (6) qui est différente de la vitesse de transport de l'élément de transport (8).

5. Dispositif selon la revendication 3 ou 4,
**caractérisé en ce que** le sens périphérique (20) au niveau de la surface périphérique (14) du rouleau de retournement (12) est identique au sens de transport (18) de l'élément de transport (8).

6. Dispositif selon la revendication 4 ou 5,
**caractérisé en ce que** la vitesse périphérique du rouleau de retournement (12) est supérieure ou inférieure à la vitesse de transport de l'élément de transport (8) portant les saucisses.

7. Dispositif selon l'une des revendications précédentes,
**caractérisé en ce que** l'élément de transport (8) présente au moins une bande de transport (22, 24, 24') en courbe.

8. Dispositif selon l'une des revendications 3 à 7,
**caractérisé en ce que** l'élément de transport (8) présente trois bandes de transport (22, 24, 24') agencées les unes à côté des autres, séparées de préférence les unes des autres, dans lequel le rouleau de retournement (12) est agencé au-dessus de la bande de transport (22) médiane.

9. Dispositif selon la revendication 8,
**caractérisé en ce que** la bande de transport (22) médiane peut être entraînée au moyen d'un système d'entraînement à une première vitesse de transport, et que les bandes de transport (24, 24') extérieures peuvent être entraînées au moyen du système d'entraînement ou d'un système d'entraînement séparé à une seconde vitesse de transport, dans lequel en fonctionnement les deux bandes de transport (24, 24') extérieures présentent une vitesse de transport qui est différente de la vitesse de transport de la bande de transport (22) médiane, est de préférence supérieure à la vitesse de transport de la bande de transport (22) médiane.

10. Dispositif selon la revendication 8 ou 9,
**caractérisé en ce que** les surfaces des bandes de transport (24, 24') extérieures présentent une rugosité de surface qui est différente de la rugosité de surface de la bande de transport (22) médiane, de préférence est plus faible que la rugosité de surface de la bande de transport (22) médiane.

11. Dispositif selon l'une des revendications 3 à 10,
**caractérisé en ce que** le rouleau de retournement (12) présente une distance fixe par rapport au côté supérieur de l'élément de transport (8) ou est modifiable au moyen d'un système de réglage à distance du côté supérieur de l'élément de transport (8).

12. Dispositif selon la revendication 11,
**caractérisé en ce que** le rouleau de retournement (12) modifiable à distance du côté supérieur de l'élément de transport (8) est agencé à une extrémité d'un bras de levier qui est reçu de manière mobile autour d'un palier rotatif.

13. Dispositif selon la revendication 12,
**caractérisé en ce qu'**un contrepoids équilibrant sensiblement la masse du rouleau est agencé à l'extrémité opposée au rouleau de retournement (12) du bras de levier.

14. Dispositif selon l'une des revendications précédentes,
**caractérisé par** un système de détection (36) avec au moins un capteur (38) pour la détection de l'alignement des saucisses (6) sur l'élément de transport (8), dans lequel le capteur (38) est agencé de préférence dans le sens de transport de l'élément de transport (8) avant le système de retournement (10').

15. Dispositif selon la revendication 14,
**caractérisé en ce que** le système de détection (36) est couplé à un système de commande du dispositif (1') et aménagé afin de commander, en fonction de l'alignement détecté des saucisses (6) sur l'élément de transport (8), au moins le système de retournement (10') et/ou l'élément de transport (8).

16. Dispositif selon l'une des revendications 3 à 15,
**caractérisé en ce que** la surface périphérique (14) du rouleau de retournement (12) est réalisée en un matériau avec des propriétés élastiques et souples.

17. Dispositif selon l'une des revendications 3 à 16,
**caractérisé en ce qu'**un profilage est réalisé au niveau de la surface périphérique (14) du rouleau de retournement (12) et/ou la surface périphérique (14) du rouleau de retournement (12) est réalisée incurvée de manière convexe.

18. Dispositif selon au moins l'une des revendications 3 à 17,
**caractérisé en ce que** la largeur de la surface périphérique (14) du rouleau de retournement (12) est choisie, et de préférence la surface périphérique (14) du rouleau de retournement (12) et la saucisse sont positionnées sur l'élément de transport l'une par rapport à l'autre de sorte que la surface périphérique (14) puisse être amenée en contact seulement dans une section médiane avec la saucisse (6).

19. Dispositif selon au moins l'une des revendications 3 à 18,
**caractérisé en ce que** la distance du rouleau de retournement (12) au côté supérieur de l'élément de transport (8) est adaptée au calibre des saucisses (6) de sorte que le rouleau de retournement (12), pendant le contact avec une saucisse (6), déforme légèrement la saucisse (6) sensiblement élastiquement.

20. Procédé d'alignement de saucisses incurvées (6) comprenant les étapes :
- de déplacement des saucisses (6) à distance les unes des autres le long d'une course de transport prédéfinie, dans lequel les saucisses (6) sont alignées avec leur axe longitudinal sensiblement perpendiculairement au sens de transport ;
- de mise en contact des saucisses (6) déplacées dans le sens de transport les unes après les autres avec un système de retournement (10, 10'), et
- de génération d'une rotation des saucisses (6) sensiblement autour de leur axe longitudinal par un mouvement relatif dominant entre la saucisse (6) et le système de retournement (10, 10').
